# EUROPÄISCHE PATENTSCHRIFT

(11) **EP 3 326 849 B1**
(45) Veröffentlichungstag und Bekanntmachung des Hinweises auf die Patenterteilung: **08.05.2024**
(21) Anmeldenummer: 17162311.9
(22) Anmeldetag: 22.03.2017
(51) Int. Cl.: B60H 1/00, F24F 3/153, F24F 11/00, B60N 2/56

(54) **VERFAHREN UND KLIMATISIERUNGSMODUL ZUR KLIMATISIERUNG EINES AUFENTHALTSBEREICHS EINER PERSON**
METHOD AND AIR CONDITIONING MODULE FOR AIR CONDITIONING AN AREA IN WHICH A PERSON IS PRESENT
PROCÉDÉ ET MODULE DE CLIMATISATION D'UNE ZONE DE SÉJOUR D'UNE PERSONNE

(30) Priorität: 23.11.2016 EP 16200299
(43) Veröffentlichungstag der Anmeldung: 30.05.2018
(73) Patentinhaber: Elektrosil GmbH, 22761 Hamburg (DE)
(72) Erfinder: Niemann, Hendrik, 21224 Rosengarten (DE)
(74) Vertreter: RGTH

(56) Entgegenhaltungen:
- EP-A1- 2 990 093
- WO-A1-2015/170414
- DE-A1-102010 042 927
- JP-A- 2004 293 849
- US-A1- 2003 121 988
- US-A1- 2015 121 902
- US-A1- 2015 273 975

## Beschreibung

### Technisches Gebiet

Die Erfindung betrifft ein Verfahren zur Klimatisierung eines Aufenthaltsbereichs einer Person mit einem Klimatisierungsmodul.

Des Weiteren betrifft die Erfindung ein Klimatisierungsmodul mit einem Lüfter zur Erzeugung eines Luftstroms und einem Heizmodul zur Erwärmung des Luftstroms. Das Klimatisierungsmodul weist eine Sensoranordnung zur Ermittlung einer Lufttemperatur und einer Luftfeuchtigkeit auf.

Ferner betrifft die Erfindung einen Sitz, insbesondere einen Fahrzeugsitz, mit einem Klimatisierungsmodul und eine Matratze mit einem Klimatisierungsmodul.

### Stand der Technik

In der DE 20 2010 011 016 U1 wird ein Heizmodul zum Erwärmen eines Luftstromes, beispielsweise für den Einsatz in einen Fahrzeugsitz, beschrieben.

Durch die DE 10 2014 217 356 A1 ist ein Verfahren zur Klimatisierung einer Fahrgastzelle eines Fahrzeuges bekannt. Dabei werden die Hauttemperatur und die Feuchteabgabe eines Fahrzeuginsassen gemessen und basierend auf den gemessenen Parametern der individuelle klimatische Komfort optimiert.

Die WO 2009/09 75 72 A1 betrifft ein Klimamodul zur Temperierung eines Fahrzeugsitzes. Das Klimamodul weist einen Lufteinlass und einen Luftauslass auf, zwischen denen ein Heizelement angeordnet ist. Die Luft wird durch einen Lüfter transportiert. Getrennt von der Anordnung des Heizelementes und des Lüfters sind Temperatur- und Feuchtigkeitssensoren vorgesehen, wobei basierend auf den durch diese Sensoren ermittelten Parametern über eine Steuereinrichtung sowohl das Heizelement sowie auch der Lüfter angesteuert werden.

In der DE 10 2010 042 927 A1 wird eine Kopfstütze mit Temperatur- und Feuchtigkeitsregelung offenbart, welche ein thermoelektrisches Modul zum Erwärmen oder Abkühlen der Luft, ein Gebläse sowie einen Sensor aufweist. Die Drehrichtung des Gebläses kann geändert werden, um Warmluft und Feuchtigkeit außerhalb der Kopfstütze zu absorbieren.

Die WO 2015/170414 A1 zeigt eine Umluftvorrichtung, die Luft zwischen mehreren Räumen zirkuliert. Eine oder mehrere ringförmige Geräte sind vorgesehen. Zum Beispiel, wenn es zwei Räume gibt, die klimatisiert werden müssen, wird einer zwischen diesen beiden Räumen zur Verfügung gestellt. Wenn drei oder mehr Räume klimatisiert werden müssen, werden außerdem mehrere Räume zur Verfügung gestellt. Die Umluftvorrichtung enthält einen Ventilator und einen Motor. Die Luftblasrichtung der Umluftvorrichtung kann normal/rückwärts betrieben werden. Die Zu- / Auslasskanäle treffen auf den Ein-/Ausgang der Umwälzvorrichtung und werden zum Sauganschluss oder zum Ausblasöffnungsanschluss der Luft im Raum. Da die Luftblasrichtung der Umluftanlage in der Lage ist, einen normalen / umgekehrten Betrieb zu ermöglichen, ist es möglich, die Luftblasrichtung entsprechend dem Klimazustand jedes Raumes zu ändern.

Die EP 2 990 093 A1 beschreibt einen erster Wärmetauscher, einen Trockenmittelblock und einen zweiter Wärmetauscher, die in Reihe angeordnet sind. Ferner werden bei einem Entfeuchtungsvorgang abwechselnd eine erste Betriebsart und eine zweite Betriebsart wiederholt. In der ersten Betriebsart wird der erste Wärmetauscher als Kondensator oder Heizkörper und der zweite Wärmetauscher als Verdampfer betrieben. In der zweiten Betriebsart wird der erste Wärmetauscher als Verdampfer und der zweite Wärmetauscher als Kondensator oder Heizkörper betrieben.

Die DE 10 2010 042927 A1 zeigt eine Luftbehandlungskomponente, die in einem Abschnitt einer Rückenlehne positioniert ist. In einer Ausführungsform weist die Luftbehandlungskomponente ein Gebläse, einen Kanal und ein thermoelektrisches Modul auf. Das Gebläse bläst Luft durch den Kanal, an den das thermoelektrische Modul gekoppelt ist. Das thermoelektrische Modul heizt und kühlt die durch den Kanal geblasene Luft gezielt, wodurch behandelte Luft entsteht. Die behandelte Luft tritt aus dem Kanal aus und wirkt mit der Temperaturregelungsschicht zusammen. Bei einer Ausführungsform ist eine Lüfterdrehung des Gebläses reversibel, um beispielsweise Warmluft oder Feuchtigkeit durch die Öffnungen der Verkleidungsabdeckung zu absorbieren oder zu saugen, wodurch für Belüftung gesorgt ist.

Die US 2003/121988 A1 beschreibt ein Lüftungssystem, das in einem Fahrzeuginnenraum enthalten ist,. Das Lüftungssystem umfasst ein Gebläse, eine erste Entlüftung, eine zweite Entlüftung, mindestens einen Innentemperatursensor, mindestens einen externen Temperatursensor, einen Bewegungssensor für windige Tage und staubige Bereiche, einen Feuchtigkeitssensor, einen Sonnenlastsensor und ein Steuermodul. Das Gebläse ist ein herkömmliches Fahrzeugklimagebläse und befindet sich im Fahrzeuginnenraum, um eine Druckdifferenz zwischen Interieur und Exterieur des Fahrzeugs zu erzeugen. Die erste Entlüftung stößt Luft aus dem Fahrzeuginnenraum aus und die zweite Entlüftung saugt Außenluft in den Fahrzeuginnenraum.

Die US 2015/273975 A1 Ein Reverse-Flow-Automobilkühlsystem zur Steuerung der Temperatur in einem Fahrzeug umfasst: einen Reverse-Flow-Lüfter, der über eine Reverse-Air-Flow-Funktion Luft aus einer Fahrzeugkabine ziehen kann; eine Reverse-Flow-Klimatisierungseinheit; einen Klimasensor; so, dass das Reverse-Flow-Klimagerät die Temperatur im Fahrzeug messen und den Betrieb des Reverse-Flow-Ventilators steuern kann, um erwärmte Luft aus der Fahrzeugkabine zu pumpen, um die Temperatur zu senken und zu kontrollieren.

Die JP 2004 293849 A zeigt eine Klimaanlage für Räume, mit Luftbewegungsmittel, das aus einem Kanal und Luftzu- und Abluftvorrichtungen in jedem Raum besteht. Ein Controller erfasst die Anwesenheit oder Abwesenheit einer Person in jedem Raum durch bildgebende Geräte und Raumpräsenz-informierende Betriebsschalter die in jedem Raum vorgesehen sind, und erkennt die Bewegung einer Person von einem Raum (einem ersten Raum) in den anderen Raum (einen zweiten Raum) basierend darauf. Wenn der Controller die Bewegung der Person erkennt, werden die Luftzu- und -abluftvorrichtungen in dem Raum, der der Ursprung der Bewegung ist, und der Raum, der das Ziel der Bewegung ist, betrieben, um die Raumluft in dem Raum zu bewegen, der der Ursprung der Bewegung in den Raum ist, der das Ziel der Bewegung ist, bis die Raumtemperatur in beiden Räumen im Wesentlichen gleich ist.

### Darstellung der Erfindung: Aufgabe, Lösung, Vorteile

Aufgabe der vorliegenden Erfindung ist es, ein möglichst einfaches und effektives Verfahren sowie ein kompaktes und flexibel einsetzbares Klimatisierungsmodul zur Klimatisierung eines Aufenthaltsbereiches einer Person vorzuschlagen. Erfindungsgemäß ist hierfür ein Verfahren zur Klimatisierung eines Aufenthaltsbereiches einer Person mit einem Klimatisierungsmodul laut Anspruch 1 vorgesehen,
wobei das Klimatisierungsmodul einen Lüfter zur Erzeugung eines Luftstroms und ein Heizmodul zur Erwärmung des Luftstroms aufweist. Das Klimatisierungsmodul weist ferner eine im Luftstrom angeordnete Sensoranordnung zur Ermittlung einer Lufttemperatur und einer Luftfeuchtigkeit auf, wobei beim Messen der Luftfeuchtigkeit die Feuchteabgabe der Person ermittelt wird und beim Messen der Lufttemperatur die Lufttemperatur im nahen Aufenthaltsbereich der Person ermittelt wird. Das Verfahren weist zumindest die folgenden Schritte auf:
- Betreiben des Lüfters in einer ersten Drehrichtung in einem Messmodus, und
- Ermitteln der Lufttemperatur und der Luftfeuchtigkeit mit der Sensoranordnung, und
- Ansteuern des Lüfters und des Heizmoduls in Abhängigkeit der ermittelten Lufttemperatur und Luftfeuchtigkeit, und
- Betreiben des Klimatisierungsmoduls in einem Heizmodus oder Kühlmodus.

Das Klimatisierungsmodul ist sowohl zum Erwärmen sowie auch zum Kühlen des Aufenthaltsbereichs mindestens einer Person ausgebildet. Zum Erwärmen weist das Klimatisierungsmodul mindestens ein Heizmodul, beispielsweise mit einem PTC-Heizelement und einem Wärmeleitelement, auf. Das Heizmodul kann auch mehrere Heizelemente und/oder Wärmeleitelemente aufweisen. Des Weiteren kann das Klimatisierungsmodul auch mehrere Heizmodule aufweisen.

Der Lüfter und das Heizmodul sind getrennt voneinander ansteuerbar. Beispielsweise kann bei abgeschaltetem Heizmodul der Lüfter betrieben werden. Dies kann insbesondere zur Kühlung im Kühlmodus sowie auch zum Messen der Lufttemperatur und der Luftfeuchtigkeit im Messmodus dienen. Im Heizmodus wird das Heizmodul eingeschaltet. Bevorzugterweise wird im Heizmodus auch der Lüfter zur Erzeugung eines Luftstroms, welcher dann vom Heizmodul erwärmt wird, eingeschaltet.

Empfindet es eine Person im Aufenthaltsbereich als zu warm, korreliert die Feuchteabgabe des Körpers relativ stark mit dem individuell empfundenen Klimakomfort. Empfindet es eine Person hingegen als zu kalt, korreliert dagegen die Hauttemperatur der Person relativ stark mit dem individuell empfundenen Klimakomfort. Um den individuell empfundenen klimatischen Komfort zu optimieren, ist erfindungsgemäß vorgesehen, dass die gemessene Lufttemperatur für die Ansteuerung des Lüfters und des Heizmoduls im Heizmodus mehr Einfluss hat als die gemessene Luftfeuchtigkeit und/oder dass die gemessene Luftfeuchtigkeit für die Ansteuerung des Lüfters und des Heizmoduls im Kühlmodus mehr Einfluss hat als die gemessene Lufttemperatur. Hierunter ist zu verstehen, dass für die Ansteuerung des Lüfters und des Heizmoduls im Wesentlichen der Parameter Lufttemperatur berücksichtigt wird, falls der individuell empfundene Klimakomfort als zu "kalt" betrachtet wird. Falls der individuell empfundene Klimakomfort als zu "warm" betrachtet wird, wird im Wesentlichen der Parameter Luftfeuchtigkeit für die Ansteuerung des Lüfters und des Heizmoduls berücksichtigt.

Erfindungsgemäß ist das Klimatisierungsmodul möglichst körpernah an der Person im zu klimatisierenden Aufenthaltsbereich angeordnet. Beispielsweise kann das Klimatisierungsmodul in oder an einem Sitz, insbesondere einem Fahrzeugsitz, angeordnet sein. Auch könnte das Klimatisierungsmodul in oder an einer Matratze angeordnet sein.

Durch die körpernahe Anordnung des Klimatisierungsmoduls wird beim Messen der Luftfeuchtigkeit die Feuchteabgabe der Person ermittelt. Beim Messen der Lufttemperatur wird die Lufttemperatur im nahen Aufenthaltsbereich der Person ermittelt.

Somit dienen das erfindungsgemäße Verfahren sowie das erfindungsgemäße Klimatisierungsmodul im Wesentlichen zur Klimatisierung eines Nahbereiches der Person und nicht zur Klimatisierung von größeren Räumen.

Das Klimatisierungsmodul kann im Messmodus und im regulären Betrieb, beispielsweise im Kühlmodus und im Heizmodus, betrieben werden. Hierfür sind Lüfter und Heizmodul sowie auch die Sensoranordnung in einem Modul integriert.

Bevorzugterweise ist hierfür auch die Steuerung selbst im Klimatisierungsmodul integriert.

Zur Regulierung des Klimas werden erfindungsgemäß zumindest zwei Parameter, nämlich die Lufttemperatur und die Luftfeuchtigkeit, ermittelt und abhängig von beiden Parametern der Lüfter und das Heizmodul angesteuert und dadurch das Klima im Aufenthaltsbereich der Person geregelt. Dabei wird insbesondere der individuell von der Person im Aufenthaltsbereich empfundene klimatische Komfort optimiert.

Unter der "ersten Drehrichtung" ist im Sinne der Erfindung eine der beiden Drehrichtungen des Lüfters zu verstehen. Dabei beziehen sich die "erste Drehrichtung" und die "zweite Drehrichtung" explizit nicht auf eine bestimmte Reihenfolge der Drehrichtungen des Lüfters. Der Lüfter kann in beiden Richtungen betrieben werden.

Dadurch, dass mit dem erfindungsgemäßen Verfahren mittels eines Klimatisierungsmoduls nicht nur Lüfter und Heizmodul angesteuert, sondern auch die Lufttemperatur und die Luftfeuchtigkeit im Messmodus ermittelt werden können, kann ein besonders einfaches und flexibles Verfahren bereitgestellt werden. Das Verfahren kann in einem Klimatisierungsmodul eingesetzt werden, ohne dass eine aufwendige und zentrale Steuerung erforderlich ist. Die Steuerung beziehungsweise Regelung, der Messmodus sowie der Heizmodus und Kühlmodus sind im selben Klimatisierungsmodul integriert. Zur Erhöhung des Komforts können beispielsweise in einem Sitz oder einer Matratze auch mehrere Klimatisierungsmodule angeordnet beziehungsweise integriert werden. Jedes Klimatisierungsmodul kann dann individuell und unabhängig von den anderen Klimatisierungsmodulen arbeiten. Eine Verbindung der einzelnen Klimatisierungsmodule und eine zentrale Steuerung sind basierend auf dem erfindungsgemäßen Verfahren nicht erforderlich.

Bevorzugterweise wird der Lüfter im Heizmodus in einer zweiten Drehrichtung betrieben. Die zweite Drehrichtung ist dabei der ersten Drehrichtung entgegengesetzt. Beispielsweise kann der Lüfter im Heizmodus im Blasbetrieb und im Messmodus im Saugbetrieb betrieben werden. Blasbetrieb und Saugbetrieb beziehen sich dabei auf einen Bezugspunkt am Heizmodul. Hierunter ist zu verstehen, dass die Luft vom Lüfter im Blasbetrieb über und/oder durch das Heizmodul geblasen wird. Im Saugbetrieb wird die Luft vom Lüfter über und/oder durch das Heizmodul angezogen.

Auch ist bevorzugterweise vorgesehen, dass das Heizmodul im Messmodus abgeschaltet wird oder ausgeschaltet bleibt. Somit ist im Messmodus vorteilhafterweise keine Ansteuerung des Heizmoduls vorgesehen. Während des Messens der Luftfeuchtigkeit und der Lufttemperatur wird somit durch das Klimatisierungsmodul nicht geheizt. Ein erwärmtes Heizmodul könnte die gemessene Lufttemperatur im Messmodus ansonsten beeinflussen beziehungsweise verfälschen.

Besonders bevorzugterweise ist vorgesehen, dass das Heizmodul eine vorgesehene Zeitspanne vor dem Einschalten des Messmodus abgeschaltet wird. Dadurch kann sichergestellt werden, dass das Heizmodul vor dem Beginn der Temperatur- und Luftfeuchtigkeitsmessung abkühlt. Die vorgegebene Zeitspanne beträgt bevorzugterweise mindestens 1 Sekunde, besonders bevorzugterweise mindestens 2 Sekunden, sowie ganz besonders bevorzugterweise mindestens 5 Sekunden.

Der Lüfter wird im Kühlmodus bevorzugterweise in der ersten Drehrichtung und somit in derselben Drehrichtung wie im Messmodus betrieben. Grundsätzlich findet ein Kühlen immer dann statt, wenn das Heizmodul ausgeschaltet und der Lüfter eingeschaltet ist. Bevorzugterweise wird das Klimatisierungsmodul im Kühlmodus aber im Saugbetrieb betrieben.

Vorteilhafterweise wird der Messmodus in vorgegebenen Zeitabständen eingeschaltet beziehungsweise aktiviert. Dabei kann der Messmodus regelmäßig und kontinuierlich, zum Beispiel einmal pro Minute, einmal in 5 Minuten oder einmal in 10 Minuten, eingeschaltet werden.

Des Weiteren ist bevorzugterweise vorgesehen, dass die Lufttemperatur und die Luftfeuchtigkeit im Messmodus über eine vorgegebene Messzeit ermittelt werden. Während der Messzeit können Lufttemperatur und Luftfeuchtigkeit kontinuierlich gemessen und dann beispielsweise gemittelt werden. Hierfür sollte die Messzeit bevorzugterweise lang genug sein, um aussagekräftige Parameter zu erhalten, aber nicht zu lange ausgelegt sein, da im Messmodus durch das Klimatisierungsmodul bei laufendem Lüfter gleichzeitig gekühlt wird. Besonders bevorzugterweise beträgt die Messzeit mindestens 2 Sekunden sowie höchstens 1 Minute.

Grundsätzlich könnte die Luftfeuchtigkeit im Messmodus als absolute oder relative Luftfeuchtigkeit ermittelt werden. Bevorzugterweise wird die Luftfeuchtigkeit im Messmodus aber als absolute Luftfeuchtigkeit ermittelt.

Erfindungsgemäß ist ferner ein Klimatisierungsmodul mit einem Lüfter zur Erzeugung eines Luftstromes und mit einem Heizmodul zur Erwärmung des Luftstromes vorgesehen, wobei das Klimatisierungsmodul eine Sensoranordnung zur Ermittlung einer Lufttemperatur und einer Luftfeuchtigkeit aufweist. Die Sensoranordnung ist erfindungsgemäß im Luftstrom angeordnet.

Unter einem Modul ist erfindungsgemäß eine Einheit zu verstehen. Somit sind in dem Klimatisierungsmodul zumindest die Komponenten Lüfter, Heizmodul und Sensoranordnung integriert. Die Sensoranordnung weist zumindest zwei Sensorfunktionen auf. Dabei können beide Sensorfunktionen in einen einzigen Sensor integriert sein. Alternativerweise kann die Sensoranordnung zwei separate Sensoren aufweisen.

Das Heizmodul weist bevorzugterweise mindestens ein Heizelement und mindestens ein Wärmeleitelement auf. Das Heizmodul könnte auch mehrere Heizelemente und/oder mehrere Wärmeleitelemente aufweisen. Bevorzugterweise weist das Heizmodul ein erstes inneres Wärmeleitelement und ein erstes äußeres Wärmeleitelement auf, wobei das erste äußere Wärmeleitelement außerhalb eines Rahmens und das erste innere Wärmeleitelement innerhalb des Rahmens angeordnet sind. Beide Wärmeleitelemente stehen dabei in einer wärmeleitenden Verbindung. Ferner weisen beide Wärmeleitelemente bevorzugterweise jeweils mehrere Lamellen zur Abgabe von Wärme an den Luftstrom auf. Beispielsweise kann das innere Wärmeleitelement und/oder äußere Wärmeleitelement als Strangpressprofil ausgebildet sein.

Alternativerweise oder zusätzlich ist bevorzugterweise vorgesehen, dass das Heizmodul eine maximale Breite und eine maximale Höhe aufweist, wobei die maximale Höhe größer als die maximale Breite ist. Der Lüfter weist einen Lüfterdurchmesser auf, welcher bevorzugterweise im Wesentlichen der maximalen Höhe des Heizmoduls entspricht. Hierfür können die Lamellen des äußeren Wärmeleitelements entsprechend des Lüfterdurchmessers angeordnet sein. Beispielsweise kann die Kontur der Lamellen des äußeren Wärmeleitelements dem Außendurchmesser des Lüfters folgen.

Alternativerweise oder zusätzlich ist vorgesehen, dass die maximale Breite des Heizmoduls kleiner als der Lüfterdurchmesser ist. Besonders bevorzugterweise ist die maximale Breite des Heizmoduls kleiner als 80 % des Lüfterdurchmessers, sowie ganz besonders bevorzugterweise kleiner als 70 % des Lüfterdurchmessers. Beispielsweise kann die maximale Breite des Heizmoduls zwei Drittel des Lüfterdurchmessers entsprechen. Somit steht der Lüfter in Breitenrichtung des elektrischen Heizmoduls bevorzugterweise über dessen maximalen Breite hervor, wenn Lüfter und Heizmodul im Luftstrom in axialer Richtung hintereinander angeordnet sind.

Das Heizmodul dient zum Erwärmen des vom Lüfter erzeugten Luftstroms. Hierfür wird durch das Heizmodul beziehungsweise durch die Wärmeleitelemente des Heizmoduls ein luftdurchströmbarer Wärmeabgabebereich definiert. Dieser luftdurchströmbare Wärmeabgabebereich wird bevorzugterweise durch das innere Wärmeleitelement sowie das äußere Wärmeleitelement ausgebildet. Besonders bevorzugterweise sind zwei innere Wärmeleitelemente und/oder zwei äußere Wärmeleitelemente vorgesehen.

Das mindestens eine Heizelement des Heizmoduls kann beispielsweise als PTC-Heizelement ausgebildet sein. PTC-Heizelemente sind Halbleiterwiderstände, deren ohmscher Widerstand temperaturabhängig ist. Wenn die Bauteiltemperatur deutlich unter einer Referenztemperatur des jeweiligen PTC-Heizelementes liegt, weist das PTC-Heizelement einen niedrigen Widerstand auf, sodass entsprechend hohe Stromstärken durchgeleitet werden können. Wenn für eine gute Wärmeabfuhr von der Oberfläche des PTC-Heizelementes gesorgt ist, wird dabei also entsprechend viel elektrische Energie aufgenommen und als Wärme abgegeben. Steigt die Temperatur des PTC-Heizelementes jedoch über dessen Referenztemperatur, steigt auch der elektrische PTC-Widerstand rasch an, sodass die elektrische Leistungsaufnahme auf einen sehr geringen Wert begrenzt wird. Die Bauteiltemperatur nähert sich dann dem oberen Grenzwert, der von der Wärmeabgabe an die Umgebung des PTC-Heizelementes abhängig ist.

Das Klimatisierungsmodul kann im Messmodus zur Messung der Lufttemperatur und Luftfeuchtigkeit sowie auch im regulären Betrieb, nämlich im Heizmodus und Kühlmodus, betrieben werden. Somit kann das Klimatisierungsmodul individuell und ohne eine zentrale Steuerung flexibel eingesetzt werden. Sämtliche notwendigen Komponenten sind im Klimatisierungsmodul integriert.

Es ist erfindungsgemäß vorgesehen, dass das Klimatisierungsmodul auch eine Steuerung aufweist, welche zur Ansteuerung des Lüfters und des Heizmoduls in Abhängigkeit der von der Sensoranordnung ermittelten Parameter ausgebildet ist. Dabei ist die Steuerung vorzugsweise in das Klimatisierungsmodul integriert. Die Steuerung kann beispielsweise einen Mikroprozessor und eine Software aufweisen beziehungsweise daraus bestehen.

Auch ist bevorzugterweise vorgesehen, dass das Klimatisierungsmodul ein Gehäuse aufweist, wobei das Gehäuse den Lüfter, das Heizmodul und die Sensoranordnung zumindest umfänglich umschließt. Dabei können die Stirnseiten des Klimatisierungsmoduls offen gelassen werden oder zumindest Durchbrechungen aufweisen. Die Stirnseiten bilden somit die Lufteinlass- und Luftauslassöffnungen. Besonders bevorzugterweise sind sämtliche Komponenten, nämlich der Lüfter, das Heizmodul, die Sensoranordnung und die Steuerung innerhalb des Gehäuses angeordnet. Somit kann ein besonders kompaktes Klimatisierungsmodul vorgesehen werden, wobei auch keine separate Anordnung und Verdrahtung einer externen Sensoranordnung erforderlicher ist. Das Klimatisierungsmodul kann beispielsweise in einfacher Weise in einen Sitz, insbesondere einen Fahrzeugsitz, oder eine Matratze eingesetzt werden, ohne dass eine Verbindung zu einer zentralen Steuerung oder eine Anordnung separater Sensoren erforderlich ist.

Des Weiteren ist bevorzugterweise vorgesehen, dass der Lüfter und das Heizmodul im Luftstrom in axialer Richtung hintereinander angeordnet sind. Das Klimatisierungsmodul weist bevorzugterweise einen Messmodus für die Ermittlung der Lufttemperatur und der Luftfeuchtigkeit sowie einen Heizmodus zum Erwärmen des Aufenthaltsbereichs einer Person auf. Dabei dreht der Lüfter im Messmodus und im Heizmodus in unterschiedlicher Richtung. Der Lüfterantrieb ist somit reversierbar, wobei der Lüfter in beiden Richtungen betrieben werden kann. Beispielsweise kann im Heizmodus ein Blasbetrieb und im Messmodus ein Saugbetrieb vorgesehen sein. Blas- und Saugbetrieb beziehen sich dabei auf den Bezugspunkt Heizmodul. Im Kühlmodus kann der Lüfter beispielsweise wie im Messmodus betrieben werden.

Des Weiteren ist bevorzugterweise vorgesehen, dass der Lüfter als Axiallüfter ausgebildet ist. Insbesondere bei in axialer Richtung hintereinander angeordnetem Heizmodul und Lüfter ist somit ein reversierbarer Betrieb in besonders geeigneter Weise realisierbar.

Bevorzugterweise ist das Klimatisierungsmodul zur Klimatisierung eines Aufenthaltsbereichs einer Person gemäß einem vorbeschriebenen Verfahren ausgebildet.

Erfindungsgemäß ist ferner ein Sitz, insbesondere ein Fahrzeugsitz vorgesehen, wobei im oder am Sitz ein vorbeschriebenes Klimatisierungsmodul angeordnet ist. Es können auch mehrere Klimatisierungsmodule in oder an einem Sitz angeordnet sein. Beispielsweise kann ein Klimatisierungsmodul oder können mehrere Klimatisierungsmodule in das Sitzkissen eines Sitzes, in die Sitzlehne und/oder die Kopfstütze des Sitzes integriert sein. Besonders bevorzugterweise ist mindestens ein Klimatisierungsmodul in den Sitzschaum eines Sitzkissens eines Fahrzeugsitzes integriert.

Des Weiteren ist erfindungsgemäß eine Matratze mit mindestens einem vorbeschriebenen Klimatisierungsmodul vorgesehen. Es können auch mehrere Klimatisierungsmodule an oder in der Matratze angeordnet sein.

### Kurze Beschreibung der Zeichnungen

Die Erfindung wird nun in Bezug auf die begleitenden Zeichnungen anhand besonders bevorzugter Ausführungsformen beispielhaft erläutert.

Es zeigen schematisch:
- Figur 1:: eine perspektivische Ansicht eines Klimatisierungsmoduls,
- Figur 2:: eine weitere perspektivische Ansicht wesentlicher Komponenten eines Klimatisierungsmoduls, wobei das Gehäuse des Klimatisierungsmoduls transparent dargestellt ist,
- Figur 3:: eine Schnittdarstellung durch ein Klimatisierungsmodul,
- Figuren 4 und 5:: Zeitdiagramme zur Erläuterung eines Verfahrens zur Klimatisierung eines Aufenthaltsbereichs einer Person,
- Figur 6a:: einen Sitz mit darin integrierten Klimatisierungsmodulen, und
- Figur 6b:: eine Matratze mit darin integrierten Klimatisierungsmodulen.

### Bevorzugte Ausführungsformen der Erfindung

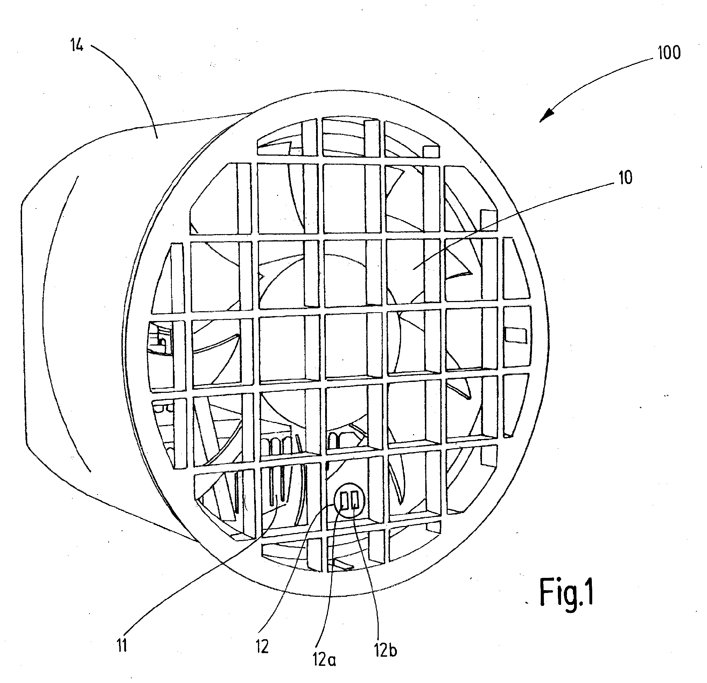

In Figur 1 ist eine perspektivische Ansicht eines Klimatisierungsmoduls 100 gezeigt, wobei sämtliche Komponenten, der Lüfter 10, das Heizmodul 11, die Sensoranordnung 12 sowie die Steuerung 13 (in Figur 1 nicht dargestellt) in einem Gehäuse 14 angeordnet sind.

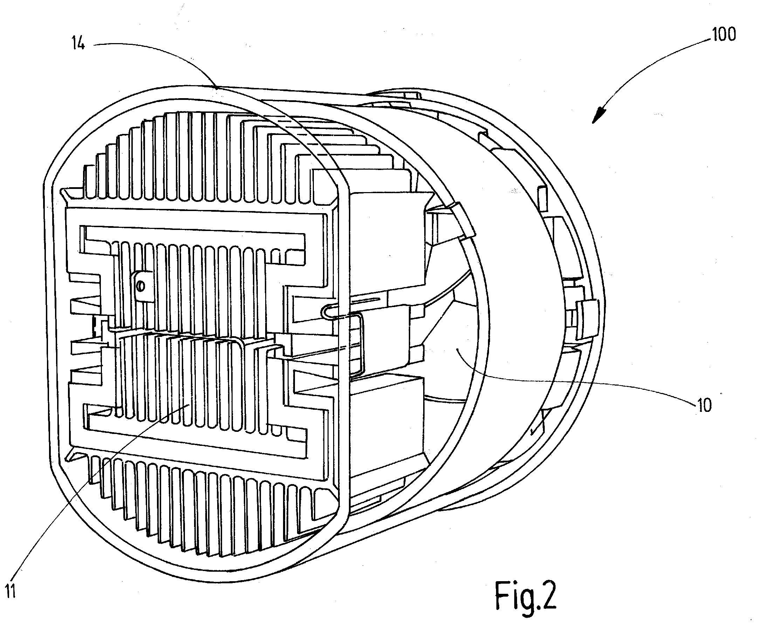

Figur 2 zeigt eine weitere perspektivische Ansicht des Klimatisierungsmoduls 100, wobei das Gehäuse 14 der besseren Übersicht halber transparent dargestellt ist.

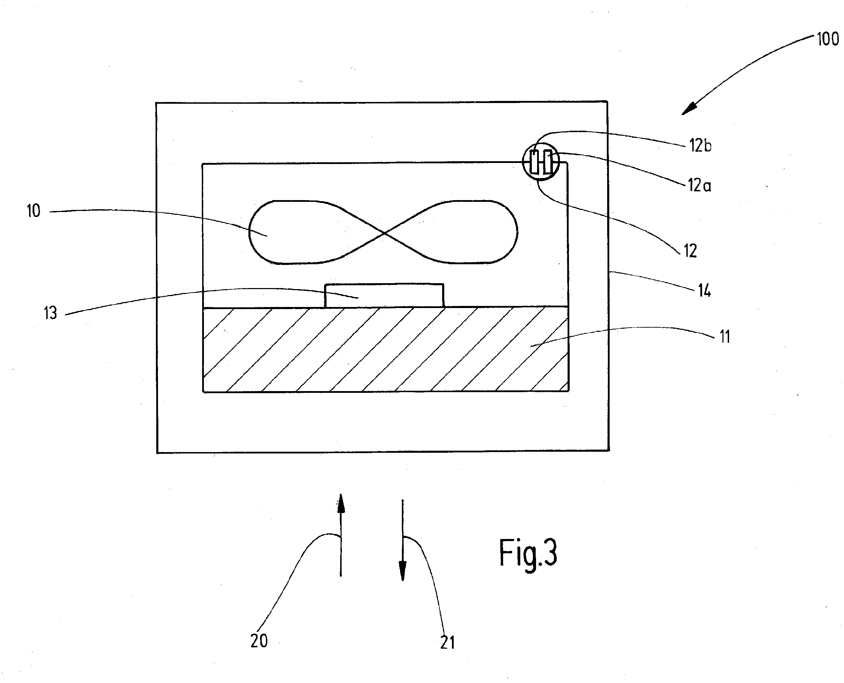

In Figur 3 ist eine Schnittdarstellung durch ein Klimatisierungsmodul 100 gezeigt. Figur 3 zeigt dabei die wesentlichen Komponenten, nämlich den Lüfter 10, das Heizmodul 11, die Sensoranordnung 12 und die Steuerung 13. All diese Komponenten sind in einem Gehäuse 14 angeordnet. In axialer Richtung sind Lüfter 10 und Heizmodul 11 hintereinander angeordnet. Die Sensoranordnung 12 besteht aus einem Temperatursensor 12a zur Messung der Lufttemperatur und einem Feuchtigkeitssensor 12b zur Messung der Luftfeuchtigkeit. Die Sensoranordnung 12 ist ebenfalls im Luftstrom angeordnet. Insbesondere ist die Sensoranordnung 12 in axialer Richtung hinter dem Lüfter 10 sowie auf der vom Heizmodul 11 abgewandten Seite des Lüfters 10 angeordnet.

Im Messmodus 30 wird der Lüfter 10 in einer ersten Drehrichtung betrieben. Dabei wird der Luftstrom in Bezug auf das Heizmodul 11 vom Lüfter 10 angezogen. Dies ist in Figur 3 mit der Saugrichtung 20 dargestellt. Durch die Sensoranordnung 12 werden die Lufttemperatur und die Luftfeuchtigkeit im Luftstrom erfasst und ermittelt.

Im Heizmodus 31 wird der Lüfter 10 in einer zweiten Drehrichtung, nämlich der der ersten Drehrichtung entgegengesetzten Richtung, betrieben. Dabei wird der Luftstrom in Bezug auf das Heizmodul 11 geblasen. Dies ist in Figur 3 mit der Blasrichtung 21 dargestellt Das Heizmodul 11 kann somit in besonders geeigneter Weise den vom Lüfter 10 erzeugten Luftstrom erwärmen.

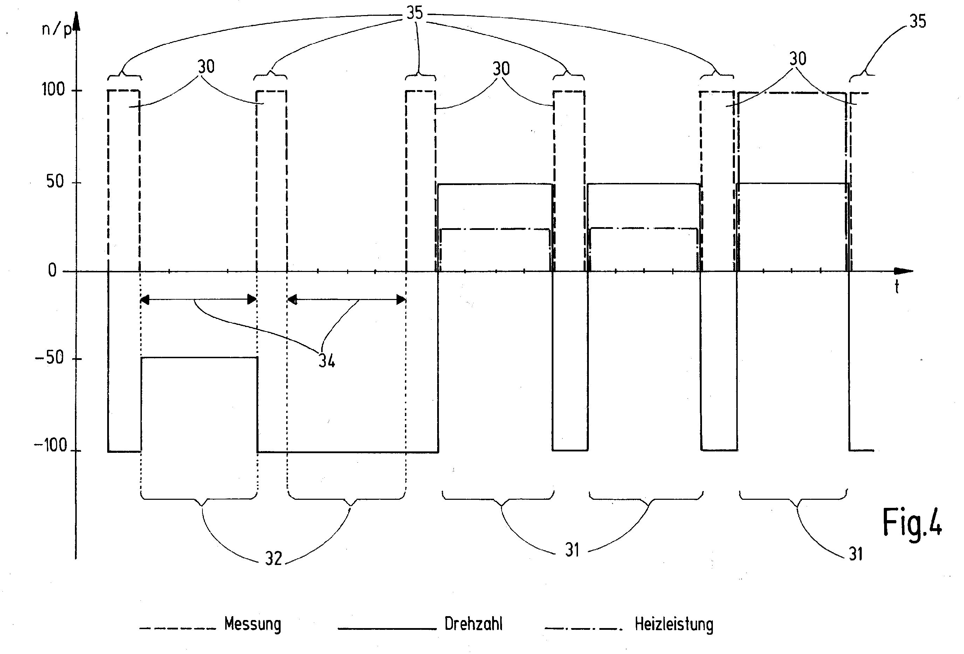

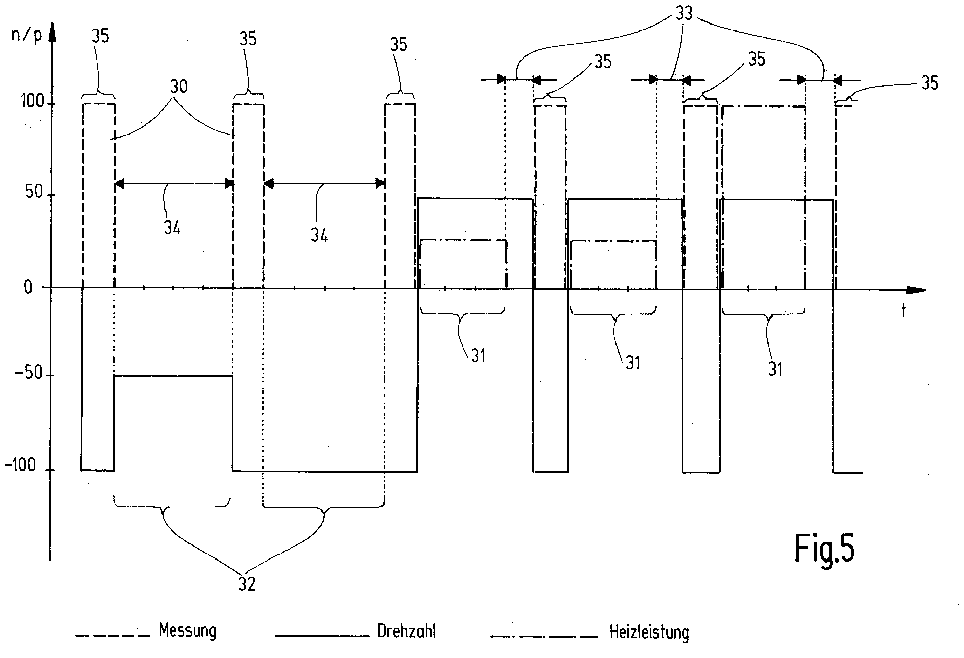

In den Figuren 4 und 5 ist ein Diagramm eines erfindungsgemäßen Verfahrens zur Klimatisierung mittels des vorbeschriebenen Klimatisierungsmoduls 100 gezeigt. In regelmäßigen Zyklen beziehungsweise Zeitabständen 34 wird das Klimatisierungsmodul 100 im Messmodus 30 betrieben. Im Messmodus 30 wird über eine Messzeit 35 die Lufttemperatur und die Luftfeuchtigkeit ermittelt. Basierend auf diesen ermittelten Parametern wird der Lüfter 10 und das Heizmodul 11 entsprechend angesteuert.

Während des Messmodus 30 wird der Lüfter 10 in einer ersten Drehrichtung betrieben. Diese Drehrichtung ist in den Figuren 4 und 5 mit einer negativen Drehzahl dargestellt.

Im Kühlmodus 32 wird der Lüfter 10 in derselben Drehrichtung wie im Messmodus 30 betrieben.

Im Heizmodus 31 ist sowohl der Lüfter 10 sowie auch das Heizmodul 11 eingeschaltet. Der Lüfter 10 wird im Heizmodus 31 in der zweiten Drehrichtung betrieben, welche in den Figuren 4 und 5 mit einer positiven Drehzahl dargestellt ist.

Wie aus den Figuren 4 und 5 ersichtlich ist, bleibt das Heizmodul 11 im Messmodus 30 ausgeschaltet oder wird vor Beginn des Messmodus 30 abgeschaltet. Somit wird im Messmodus 30 nicht durch das Heizmodul 11 geheizt.

In Figur 5 ist ferner ein Abschalten des Heizmoduls 11 vor dem Einleiten eines Messmodus 30 gezeigt. Dabei wird das Heizmodul 11 eine vorgegebene Zeitspanne 33 vor Beginn des Messmodus 30 abgeschaltet, damit das Heizmodul 11 entsprechend abkühlen kann.

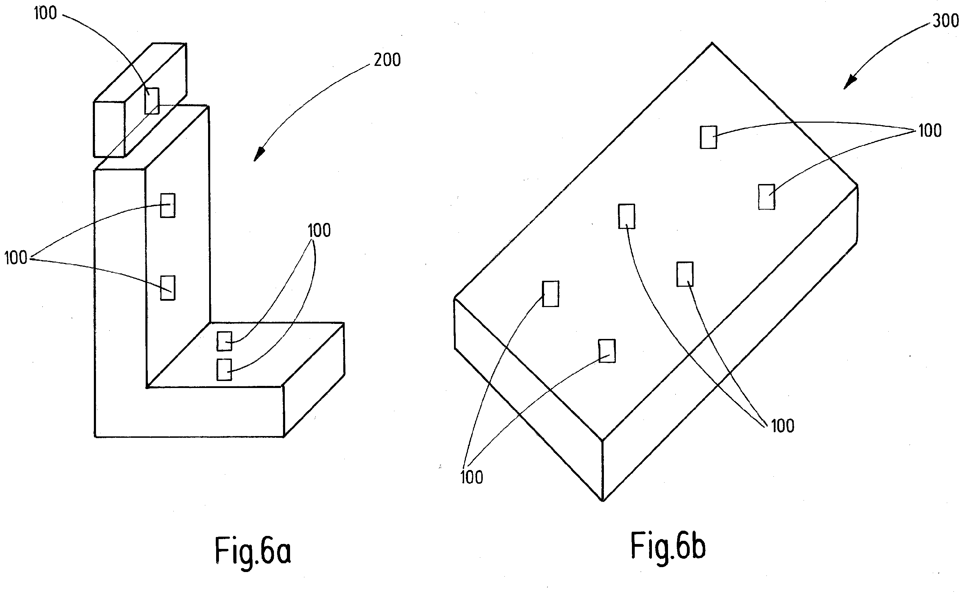

In Figur 6a ist eine perspektivische Ansicht eines Sitzes 200, nämlich eines Fahrzeugsitzes, mit darin integrierten Klimatisierungsmodulen 100 gezeigt. Die Klimatisierungsmodule 100 können im Sitzbereich, in die Lehne und/oder in die Kopfstütze integriert sein. Sämtliche in der Figur 6a gezeigten Anordnungen des Klimatisierungsmoduls 100 im Sitz 200 ermöglichen eine möglichst körpernahe Erfassung der Lufttemperatur und der Luftfeuchtigkeit.

In Figur 6b ist eine perspektivische Ansicht einer Matratze 300 mit darin integrierten Klimatisierungsmodulen 100 gezeigt. Auch hierbei ist eine sehr körpernahe Ermittlung der Lufttemperatur und der Luftfeuchtigkeit möglich.

### Bezugszeichenliste

- 100: Klimatisierungsmodul
- 200: Sitz
- 300: Matratze

- 10: Lüfter
- 11: Heizmodul
- 12: Sensoranordnung
- 12a: Temperatursensor
- 12b: Feuchtigkeitssensor
- 13: Steuerung
- 14: Gehäuse

- 20: Saugrichtung
- 21: Blasrichtung

- 30: Messmodus
- 31: Heizmodus
- 32: Kühlmodus
- 33: Zeitspanne
- 34: Zeitabstand
- 35: Messzeit

## Patentansprüche

1. Verfahren zur Klimatisierung eines Aufenthaltsbereichs einer Person mit einem Klimatisierungsmodul (100), wobei das Klimatisierungsmodul (100) einen Lüfter (10) zur Erzeugung eines Luftstroms und ein Heizmodul (11) zur Erwärmung des Luftstroms aufweist, wobei das Klimatisierungsmodul körpernah an der Person im zu klimatisierenden Aufenthaltsbereich angeordnet ist, wobei
das Klimatisierungsmodul (100) ferner eine Sensoranordnung (12; 12a, 12b) zur Ermittlung einer Lufttemperatur und einer Luftfeuchtigkeit aufweist, wobei das Verfahren zumindest die folgenden Schritte aufweist:
- Betreiben des Lüfters (10) in einer ersten Drehrichtung in einem Messmodus (30), und
- Ermitteln der Lufttemperatur und der Luftfeuchtigkeit mit der Sensoranordnung (12; 12a, 12b), und
- Ansteuern des Lüfters (10) und des Heizmoduls (11) in Abhängigkeit der ermittelten Lufttemperatur und Luftfeuchtigkeit, und
- Betreiben des Klimatisierungsmoduls (100) in einem Heizmodus (31) oder Kühlmodus (32),
**dadurch gekennzeichnet,**
**dass** die Sensoreinrichtung (12; 12a, 12b) zur Ermittlung einer Lufttemperatur und einer Luftfeuchtigkeit im Luftstrom angeordnet ist, und dadurch, dass beim Messen der Luftfeuchtigkeit die Feuchteabgabe der Person ermittelt wird und beim Messen der Lufttemperatur die Lufttemperatur im nahen Aufenthaltsbereich der Person ermittelt wird.

2. Verfahren gemäß Anspruch 1,
**dadurch gekennzeichnet,**
**dass** der Lüfter (10) im Heizmodus (31) in einer zweiten Drehrichtung betrieben wird.

3. Verfahren gemäß Anspruch 1 oder 2,
**dadurch gekennzeichnet,**
**dass** das Heizmodul (11) im Messmodus (30) abgeschaltet wird oder ausgeschaltet bleibt.

4. Verfahren gemäß einem der vorhergehenden Ansprüche,
**dadurch gekennzeichnet,**
**dass** das Heizmodul (11) eine vorgegebene Zeitspanne (33) vor dem Einschalten des Messmodus (30) abgeschaltet wird.

5. Verfahren gemäß einem der vorhergehenden Ansprüche,
**dadurch gekennzeichnet,**
**dass** der Lüfter (10) im Kühlmodus (32) in der ersten Drehrichtung betrieben wird.

6. Verfahren gemäß einem der vorhergehenden Ansprüche,
**dadurch gekennzeichnet,**
**dass** der Messmodus (30) in vorgegebenen Zeitabständen (34) eingeschaltet wird und/oder dass die Lufttemperatur und die Luftfeuchtigkeit im Messmodus (30) über eine vorgegebene Messzeit (35) ermittelt werden.

7. Verfahren gemäß einem der vorhergehenden Ansprüche,
**dadurch gekennzeichnet,**
**dass** die Luftfeuchtigkeit im Messmodus (30) als absolute Luftfeuchtigkeit ermittelt wird.

8. Klimatisierungsmodul (100) zur Klimatisierung eines Aufenthaltsbereichs einer Person, beinhaltend einen Lüfter (10) zur Erzeugung eines Luftstroms und ein Heizmodul (11) zur Erwärmung des Luftstroms, wobei das Klimatisierungsmodul körpernah an der Person im zu klimatisierenden Aufenthaltsbereich angeordnet ist, wobei das Klimatisierungsmodul (100) ferner eine Sensoranordnung (12; 12a, 12b) zur Ermittlung einer Lufttemperatur und einer Luftfeuchtigkeit aufweist, wobei das Klimatisierungsmodul (100) eine Steuerung (13) aufweist, welche zur Ansteuerung des Lüfters (10) und des Heizmoduls (11) in Abhängigkeit der von der Sensoranordnung (12; 12a, 12b) ermittelten Parameter ausgebildet ist,
**dadurch gekennzeichnet,**
**dass** die Sensoreinrichtung (12; 12a, 12b) zur Ermittlung einer Lufttemperatur und einer Luftfeuchtigkeit im Luftstrom angeordnet ist, und dadurch, dass die Sensoreinrichtung derart konfiguriert ist, dass beim Messen der Luftfeuchtigkeit die Feuchteabgabe der Person ermittelt wird und beim Messen der Lufttemperatur die Lufttemperatur im nahen Aufenthaltsbereich der Person ermittelt wird.

9. Klimatisierungsmodul (100) gemäß Anspruch 8,
**dadurch gekennzeichnet,**
**dass** das Klimatisierungsmodul (100) ein Gehäuse (14) aufweist, wobei das Gehäuse (14) den Lüfter (10) und das Heizmodul (11) und die Sensoranordnung (12; 12a, 12b) zumindest umfänglich umschließt.

10. Klimatisierungsmodul (100) gemäß einem der Ansprüche 8 bis 9,
**dadurch gekennzeichnet,**
**dass** der Lüfter (10) und das Heizmodul (11) im Luftstrom in axialer Richtung hintereinander angeordnet sind.

11. Klimatisierungsmodul (100) gemäß einem der Ansprüche 8 bis 10,
**dadurch gekennzeichnet,**
**dass** das Klimatisierungsmodul (100) einen Messmodus (30) für die Ermittlung der Lufttemperatur und der Luftfeuchtigkeit sowie einen Heizmodus (31) zum Erwärmen eines Aufenthaltsbereichs einer Person aufweist, wobei der Lüfter (10) im Messmodus (30) und im Heizmodus (31) in unterschiedlicher Richtung dreht.

12. Klimatisierungsmodul (100) gemäß einem der Ansprüche 8 bis 11,
**dadurch gekennzeichnet,**
**dass** der Lüfter (10) als Axiallüfter ausgebildet ist.

13. Klimatisierungsmodul (100) gemäß einem der Ansprüche 8 bis 12,
**dadurch gekennzeichnet,**
**dass** das Klimatisierungsmodul (100) zur Klimatisierung eines Aufenthaltsbereichs einer Person gemäß eines Verfahrens nach einem der Ansprüche 1 bis 8 ausgebildet ist.

14. Sitz (200), insbesondere Fahrzeugsitz,
**dadurch gekennzeichnet,**
**dass** im oder am Sitz (200) ein Klimatisierungsmodul (100) gemäß einem der Ansprüche 9 bis 13 angeordnet ist.

15. Matratze (300),
**dadurch gekennzeichnet,**
**dass** in oder an der Matratze (300) ein Klimatisierungsmodul (100) gemäß einem der Ansprüche 9 bis 13 angeordnet ist.

## Claims

1. Method for air-conditioning an occupied zone of a person with an air-conditioning module (100), wherein the air-conditioning module (100) has a fan (10) for generating an air flow and a heating module (11) for heating the air flow, wherein the air-conditioning module is arranged close to the body of the person in the occupied zone to be air-conditioned, wherein
the air-conditioning module (100) further has a sensor arrangement (12; 12a, 12b) for determining an air temperature and an air humidity, wherein the method has at least the following steps:
- operating the fan (10) in a first direction of rotation in a measuring mode (30), and
- determining the air temperature and air humidity with the sensor arrangement (12; 12a, 12b), and
- controlling the fan (10) and the heating module (11) depending on the determined air temperature and air humidity, and
- operating the air-conditioning module (100) in a heating mode (31) or cooling mode (32),
**characterized in that**
the sensor device (12; 12a, 12b) for determining an air temperature and an air humidity is arranged in the air flow, and **in that**, when measuring the air humidity, the humidity emission of the person is determined and, when measuring the air temperature, the air temperature in the occupied zone close to the person is determined.

2. Method according to claim 1,
**characterized in that**
the fan (10) is operated in heating mode (31) in a second direction of rotation.

3. Method according to claim 1 or 2,
**characterized in that**
the heating module (11) is switched off or remains switched off in the measuring mode (30).

4. Method according to one of the preceding claims,
**characterized in that**
the heating module (11) is switched off for a predetermined period of time (33) before the measuring mode (30) is switched on.

5. Method according to one of the preceding claims,
**characterized in that**
the fan (10) is operated in the cooling mode (32) in the first direction of rotation.

6. Method according to one of the preceding claims,
**characterized in that**
the measuring mode (30) is switched on at predetermined time intervals (34), and/or **in that** the air temperature and the air humidity are determined in the measuring mode (30) over a predetermined measuring time (35).

7. Method according to any of the preceding claims,
**characterized in that**
the air humidity is determined in the measuring mode (30) as absolute air humidity.

8. Air-conditioning module (100) for air-conditioning an occupied zone of a person, containing a fan (10) for generating an air flow and a heating module (11) for heating the air flow, wherein the air-conditioning module is arranged close to the body of the person in the occupied zone to be air-conditioned, wherein the air-conditioning module (100) further has a sensor arrangement (12; 12a, 12b) for determining an air temperature and an air humidity, wherein the air-conditioning module (100) has a controller (13) which is formed for controlling the fan (10) and the heating module (11) depending on the parameters determined by the sensor arrangement (12; 12a, 12b),
**characterized in that**
the sensor device (12; 12a, 12b) is arranged for determining an air temperature and an air humidity in the air flow, and **in that** the sensor device is configured in such a way that when the air humidity is measured, the humidity emission of the person is determined and when the air temperature is measured, the air temperature in the occupied zone close to the person is determined.

9. Air-conditioning module (100) according to claim 8,
**characterized in that**
the air-conditioning module (100) has a housing (14), wherein the housing (14) at least circumferentially encloses the fan (10) and the heating module (11) and the sensor arrangement (12; 12a, 12b).

10. Air-conditioning module (100) according to one of claims 8 to 9,
**characterized in that**
the fan (10) and the heating module (11) are arranged one behind the other in the air flow in the axial direction.

11. Air-conditioning module (100) according to one of claims 8 to 10,
**characterized in that**
the air-conditioning module (100) has a measuring mode (30) for determining the air temperature and the air humidity as well as a heating mode (31) for heating an occupied zone of a person, wherein the fan (10) rotates in different directions in the measuring mode (30) and in the heating mode (31).

12. Air-conditioning module (100) according to one of claims 8 to 11,
**characterized in that**
the fan (10) is formed as an axial fan.

13. Air-conditioning module (100) according to one of claims 8 to 12,
**characterized in that**
the air-conditioning module (100) is formed for air-conditioning an occupied zone of a person according to a method according to one of claims 1 to 8.

14. Seat (200), in particular vehicle seat,
**characterized in that**
an air-conditioning module (100) according to one of claims 9 to 13 is arranged in or at the seat (200).

15. Mattress (300),
**characterized in that**
an air-conditioning module (100) according to one of claims 9 to 13 is arranged in or at the mattress (300).

## Revendications

1. Procédé de climatisation d'une zone de séjour d'une personne avec un module de climatisation (100), le module de climatisation (100) présentant un ventilateur (10) pour générer un flux d'air et un module de chauffage (11) pour chauffer le flux d'air, le module de climatisation étant disposé à proximité du corps de la personne dans la zone de séjour à climatiser, dans lequel
le module de climatisation (100) comprend en outre un agencement de capteurs (12 ; 12a, 12b) pour déterminer une température de l'air et une humidité de l'air, le procédé comprenant au moins les étapes suivantes :
- faire fonctionner le ventilateur (10) dans un premier sens de rotation dans un mode de mesure (30), et
- détermination de la température de l'air et de l'humidité de l'air avec l'agencement de capteurs (12 ; 12a, 12b), et
- commander le ventilateur (10) et le module de chauffage (11) en fonction de la température de l'air et de l'humidité de l'air déterminées, et
- faire fonctionner le module de climatisation (100) dans un mode de chauffage (31) ou un mode de refroidissement (32),
**caractérisé en ce que**
le dispositif de détection (12 ; 12a, 12b) pour déterminer une température de l'air et une humidité de l'air est disposé dans le flux d'air, et **en ce que**, lors de la mesure de l'humidité de l'air, le dégagement d'humidité de la personne est déterminé et, lors de la mesure de la température de l'air, la température de l'air dans la zone de séjour proche de la personne est déterminée.

2. Procédé selon la revendication 1,
**caractérisé en ce que**
le ventilateur (10) fonctionne dans un deuxième sens de rotation en mode chauffage (31).

3. Procédé selon la revendication 1 ou 2,
**caractérisé en ce que**
le module de chauffage (11) est désactivé ou reste désactivé dans le mode de mesure (30).

4. Procédé selon l'une quelconque des revendications précédentes,
**caractérisé en ce que**
le module de chauffage (11) est désactivé pendant une durée prédéterminée (33) avant l'activation du mode de mesure (30).

5. Procédé selon l'une quelconque des revendications précédentes,
**caractérisé en ce que**
le ventilateur (10) fonctionne dans le mode de refroidissement (32) dans le premier sens de rotation.

6. Procédé selon l'une quelconque des revendications précédentes,
**caractérisé en ce que**
le mode de mesure (30) est activé à des intervalles de temps prédéterminés (34) et/ou **en ce que** la température de l'air et l'humidité de l'air sont déterminées dans le mode de mesure (30) sur une durée de mesure prédéterminée (35).

7. Procédé selon l'une quelconque des revendications précédentes,
**caractérisé en ce que**
l'humidité de l'air dans le mode de mesure (30) est déterminée en tant qu'humidité absolue de l'air.

8. Module de climatisation (100) pour la climatisation d'une zone de séjour d'une personne, comprenant un ventilateur (10) pour générer un flux d'air et un module de chauffage (11) pour chauffer le flux d'air, le module de climatisation étant disposé à proximité du corps de la personne dans la zone de séjour à climatiser, le module de climatisation (100) comprenant en outre un agencement de capteurs (12 ; 12a, 12b) pour déterminer une température de l'air et une humidité de l'air, le module de climatisation (100) présentant une commande (13) qui est conçue pour commander le ventilateur (10) et le module de chauffage (11) en fonction des paramètres déterminés par l'agencement de capteurs (12 ; 12a, 12b),
**caractérisé en ce que**
le dispositif de détection (12 ; 12a, 12b) est disposé pour déterminer une température de l'air et une humidité de l'air dans le flux d'air, et **en ce que** le dispositif de détection est configuré de telle sorte que, lors de la mesure de l'humidité de l'air, l'émission d'humidité de la personne est déterminée et, lors de la mesure de la température de l'air, la température de l'air dans la zone de séjour proche de la personne est déterminée.

9. Module de climatisation (100) selon la revendication 8,
**caractérisé en ce que**
le module de climatisation (100) présente un boîtier (14), le boîtier (14) entourant au moins périphériquement le ventilateur (10) et le module de chauffage (11) et l'agencement de capteurs (12 ; 12a, 12b).

10. Module de climatisation (100) selon l'une quelconque des revendications 8 à 9,
**caractérisé en ce que**
le ventilateur (10) et le module de chauffage (11) sont disposés l'un derrière l'autre dans le flux d'air selon la direction axiale.

11. Module de climatisation (100) selon l'une des revendications 8 à 10,
**caractérisé en ce que**
le module de climatisation (100) présente un mode de mesure (30) pour déterminer la température de l'air et l'humidité de l'air ainsi qu'un mode de chauffage (31) pour chauffer une zone de séjour d'une personne, le ventilateur (10) tournant dans un sens différent dans le mode de mesure (30) et dans le mode de chauffage (31).

12. Module de climatisation (100) selon l'une quelconque des revendications 8 à 11,
**caractérisé en ce que**
le ventilateur (10) est conçu comme un ventilateur axial.

13. Module de climatisation (100) selon l'une des revendications 8 à 12,
**caractérisé en ce que**
le module de climatisation (100) est configuré pour climatiser une zone de séjour d'une personne selon un procédé selon l'une des revendications 1 à 8.

14. Siège (200), notamment siège de véhicule,
**caractérisé en ce qu'**
un module de climatisation (100) selon l'une des revendications 9 à 13 est disposé dans ou sur le siège (200).

15. Matelas (300),
**caractérisé en ce qu'**
un module de climatisation (100) selon l'une des revendications 9 à 13 est disposé dans ou sur le matelas (300).
